# EUROPEAN PATENT SPECIFICATION

(11) **EP 4 232 206 B1**
(45) Date of publication and mention of the grant of the patent: **20.08.2025**
(21) Application number: 21798214.9
(22) Date of filing: 28.09.2021
(51) Int. Cl.: B05B 12/00

(54) **ROBOTIC SPRAYING VEHICLE**
ROBOTER-SPRITZFAHRZEUG
VÉHICULE DE PULVÉRISATION ROBOTISÉ

(30) Priority: 30.11.2020 US 202063119151 P
(43) Date of publication of application: 30.08.2023
(73) Proprietor: HUSQVARNA AB, 561 82 Huskvarna (SE)
(72) Inventor: PRICE, Chris, Charlotte, North Carolina 28206 (US); KIRKPATRICK, Scott, Hickory, North Carolina 28602 (US); MCCLAY, James, Charlotte, North Carolina 28205 (US); MANDEVILLE, Ken, Midland, North Carolina 28107 (US)
(74) Representative: Meissner Bolte Nürnberg
(86) International application number: PCT/US2021/052322
(87) International publication number: WO 2022/115148

(56) References cited:
- WO-A1-2019/043377
- GB-A- 2 573 061
- US-A1- 2018 160 672
- US-A1- 2020 222 929

## Description

### TECHNICAL FIELD

Example embodiments generally relate to robotic vehicles and, more particularly, relate to a robotic vehicle that sprays fluid over a specific area (e.g., for de-icing, fertilization, vegetation control, etc.) in an automated fashion with a controlled flow rate.

### BACKGROUND

Grounds maintenance tasks are commonly performed using various tools and/or machines that are configured for the performance of corresponding specific tasks. Certain tasks, like snow or ice removal, are typically performed using manually operated tools or vehicles. More recently, robotic devices and/or remote controlled devices have also become options for consumers to consider. In a de-icing context, the robotic device would typically spread rock salt over a surface that is intended to be cleared. However, salt can damage vegetation and other surfaces or objects that come into contact with the rock salt. Moreover, spreading rock salt is not easy to control, so the potential for undesirable or unforeseeable damage is further expanded.

US 2018/0160672 A1 describes a robotic orchard spraying system having an autonomous delivery vehicle, autonomously delivering an amount of a premixed solution over path, the path identified by a forward-looking sensor. The vehicle comprises a dispersal fan, attached to the vehicle, and coupled to the motive engine; and a solution pump attached to the vehicle chassis and coupled to the motive engine, wherein the solution pump pumps a premixed solution onto the dispersal fan.

US 2020/0222929 A1 describes a smart nozzle assembly including a nozzle, a nozzle control mechanism, and camera rigidly attached to the nozzle for use with a mobile robot in an autonomous spray painting system. The nozzle control mechanism is configured to control flowrate, control the shape of the spray pattern, mix two or more colors, and clean dried paint at the nozzle tip. The nozzle assembly further includes a process for running software to manage or initiate the nozzle control mechanism's functionality and to provide the nozzle calibration. The calibration method for the nozzle uses an algorithm that measures the spray pattern, the distribution of paint within the spray pattern, and the relative position of the nozzle and camera. The distribution of paint within the spray pattern is measured in terms of physical quantity of delivered paint per unit area.

GB 2573061 A describes a controller configured for data communication with a robot comprising a spray gun. The controller can receive data from the robot including camera data for a video feed, laser rangefinder data and data from the spray gun. The controller can also generate on a display a spray pattern based on the data for example range finder data overlaid on video.

WO 2019/043377 A1 describes a robotic vehicle for operating in a confined space, such as under a floor of a building, for example a house. The vehicle comprises a chassis, a spray gun mounted to the chassis and arranged to spray a material on a surface of the confined space. A sensor is mounted to the chassis, the sensor being a directional sensor responsive to an environment of the sensor and for outputting sensor data. The sensor is mounted for motorised movement between a first position for capturing data indicative of a property of the spray gun, a second position for capturing further data indicative of a property of the robotic vehicle, and a third position where the sensor is protected by a cover portion of the robotic vehicle.

Accordingly, it may be desirable to provide additional options for servicing or maintaining grounds that overcome some of the difficulties described above.

### BRIEF SUMMARY

The invention is defined by the independent claim 1.

### BRIEF DESCRIPTION OF THE SEVERAL VIEWS OF THE DRAWING(S)

Having thus described the invention in general terms, reference will now be made to the accompanying drawings, which are not necessarily drawn to scale, and wherein:
FIG. 1 illustrates an example operating environment for a robotic vehicle of an example embodiment;
FIG. 2 illustrates a block diagram of various components of control circuitry to illustrate some of the components that enable or enhance the functional performance of the robotic vehicle and to facilitate description of an example embodiment;
FIG. 3 illustrates a block diagram of various components that may be employed as part of a charging station in accordance with an example embodiment;
FIG. 4 illustrates a block diagram of a spray assembly in accordance with an example embodiment;
FIG. 5 illustrates a schematic view of a nozzle according to an example embodiment;
FIG. 6 illustrates a perspective view of a robotic vehicle demonstrating a spray pattern according to an example embodiment;
FIG. 7, which is defined by FIGS. 7A, 7B, and 7C shows various spray patterns for a rotatable nozzle in accordance with an example embodiment;
FIG. 8 is a block diagram of information processing and instructions managed by a flow controller in accordance with an example embodiment;
FIG. 9 illustrates a service area separated into regions with different deicing solution densities according to an example embodiment; and
FIG. 10 illustrates a block diagram of operation of a robotic vehicle in a system according to an example embodiment.

### DETAILED DESCRIPTION

Some example embodiments now will be described more fully hereinafter with reference to the accompanying drawings, in which some, but not all example embodiments are shown. Indeed, the examples described and pictured herein should not be construed as being limiting as to the scope, applicability or configuration of the present disclosure. Rather, these example embodiments are provided so that this disclosure will satisfy applicable legal requirements. Like reference numerals refer to like elements throughout. Furthermore, as used herein, the term "or" is to be interpreted as a logical operator that results in true whenever one or more of its operands are true. As used herein, operable coupling should be understood to relate to direct or indirect connection that, in either case, enables functional interconnection of components that are operably coupled to each other.

A robotic deicer, may be an example of a robotic vehicle capable of performing deicing functions over an area that is defined by a boundary or other means. The robotic deicer may be configured to apply a deicing solution (i.e., not rock salt) within the boundary to ensure that the entire bounded area is relatively free of ice or snow. A boundary wire may be one way to define the boundary. However, since a boundary wire can be difficult to install in some areas, other strategies may be employed in some cases. For example, global positioning system (GPS), dead reckoning, local positioning beacons, physical boundaries or even visual fixing relative to various structural markers may alternatively be employed to locate and retain the robotic vehicle within the boundary. A robotic vehicle (e.g., a robotic deicer) may therefore be provided that can operate and stay within boundaries that can be defined by any of a number of different ways. Moreover, the robotic vehicle may be intelligent enough to avoid (and possibly even classify) objects it encounters by employing contactless sensors. Yet further, in some cases, the robotic vehicle may be configured to learn boundary locations, or sub-locations, based on temporary or permanent indicia. The robotic vehicle may then also be cognizant of its position within the boundary, including areas already covered (or treated) and areas still left to be covered (or treated). By enabling the robotic vehicle to accurately determine its position and experience its surroundings in a more advanced way, the robotic vehicle may experience greatly expanded capabilities with respect to the performance of functions of the robotic vehicle inside the bounded area. For example, the robotic vehicle may accurately apply deicing solution with greater precision both in terms of the rate or density of coverage, and with respect to matching application of deicing solution more accurately to the boundaries of the area being treated.

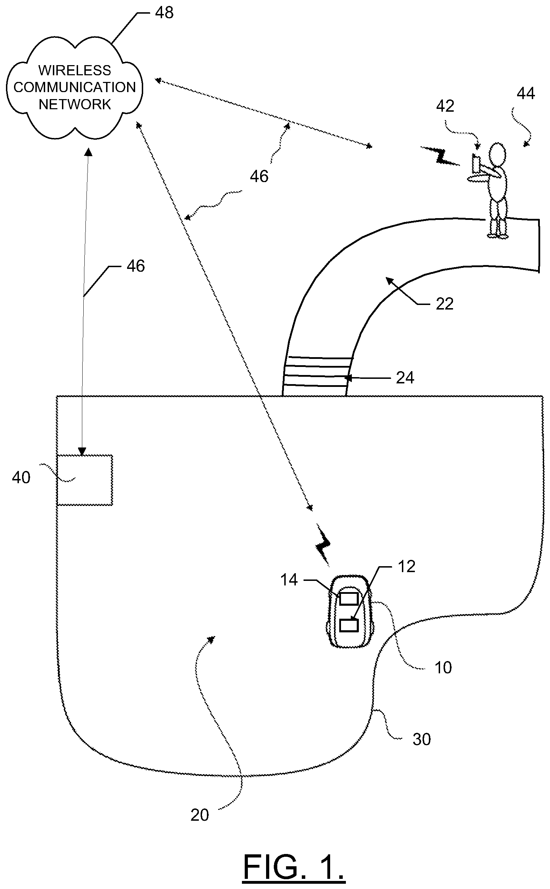

FIG. 1 illustrates an example operating environment for a robotic vehicle 10 that may be employed as a deicing robot in connection with an example embodiment. However, it should be appreciated that example embodiments may be employed on numerous other robotic vehicles, so the robotic vehicle 10 should be recognized as merely one example of such a vehicle. The robotic vehicle 10 may operate to apply a deicing solution on a service area 20 (i.e., a parking lot, walkway or other surface) enclosed by a boundary 30. The boundary 30 may be defined using one or more physical boundaries (e.g., a fence, wall, curb, boundary wire and/or the like), or programmed location based boundaries or combinations thereof. When the boundary 30 is detected, by any suitable means, the robotic vehicle 10 may be informed so that the robotic vehicle 10 can operate in a manner that prevents the robotic vehicle 10 from leaving or moving outside the boundary 30.

In the example of FIG. 1, the service area 20 includes a main portion, which may be a parking lot and a walkway 22. The walkway 22 is separated from the main portion of the service area 20 by a transition region 24, which in this case happens to be stairs. The stairs may not be traversable by the robotic vehicle 10 and may define an impassible region between the driving surface of the main portion, and the walking surface of the walkway 22. However, in other cases, the transition region 24 could be passable (e.g., forming a ramp or other surface). Notably, the walkway 22 has a limited (or much smaller) width relative to the main portion of the service area 20. Thus, the main portion of the service area 20 may be treated or covered via a plurality of overlapping passes made by the robotic vehicle 10, whereas the walkway 22 may be treated or covered with a single pass or two passes dependent upon the width of the coverage area defined by the robotic vehicle 10. In this regard, the robotic vehicle 10 may have a lateral coverage area (e.g., spray width) that is defined by the characteristics of the spray nozzle (or nozzles) used by the robotic vehicle 10. By knowing the lateral coverage area of the robotic vehicle 10, the number of passes needed to cover the main portion of the service area 20 and/or the walkway 22 may be determined.

The robotic vehicle 10 may be controlled, at least in part, via control circuitry 12 located onboard relative to the application of deicing fluid from a storage tank 14. The control circuitry 12 may include, among other things, a positioning module and a sensor module, which will be described in greater detail below. Accordingly, the robotic vehicle 10 may utilize the control circuitry 12 to define a path (or series of paths) for coverage of the service area 20 in terms of performing a task over specified portions or the entire service area 20. In this regard, the positioning module may be used to guide the robotic vehicle 10 over the service area 20 and to ensure that full coverage (of at least predetermined portions of the service area 20) is obtained, while the sensor module may detect objects and/or gather data regarding the surroundings of the robotic vehicle 10 while the service area 20 is traversed.

If a sensor module is employed, the sensor module may include a sensors related to positional determination (e.g., a GPS receiver, an accelerometer, a camera, a radar transmitter/detector, an ultrasonic sensor, a laser scanner and/or the like). Thus, for example, positional determinations may be made using GPS, inertial navigation, optical flow, radio navigation, laser or light detection and ranging (LIDAR) visual location (e.g., VSLAM) and/or other positioning techniques or combinations thereof. Accordingly, the sensors may be used, at least in part, for determining the location of the robotic vehicle 10 relative to boundaries or other points of interest (e.g., a starting point or other key features) of the service area 20, or determining a position history or track of the robotic vehicle 10 over time. The sensors may also detect collision, tipping over, or various fault conditions. In some cases, the sensors may also or alternatively collect data regarding various measurable parameters (e.g., moisture, humidity, temperature, surface conditions, etc.) associated with particular locations on the service area 20.

In an example embodiment, the robotic vehicle 10 may be battery powered via one or more rechargeable batteries. Accordingly, the robotic vehicle 10 may be configured to return to a charging station 40 that may be located at some position on or adjacent to the service area 20 in order to recharge the batteries. The batteries may power a drive system and a spray control system of the robotic vehicle 10. However, the control circuitry 12 of the robotic vehicle 10 may selectively control the application of power or other control signals to the drive system and/or the spray control system to direct the operation of the drive system and/or spray control system. Accordingly, movement of the robotic vehicle 10 over the service area 20 may be controlled by the control circuitry 12 in a manner that enables the robotic vehicle 10 to systematically traverse the service area 20 while operating the spray control system to apply deicing fluid stored in the robotic vehicle 10 over the service area 20. In cases where the robotic vehicle 10 is not a deicer, the control circuitry 12 may be configured to control another functional or working assembly that may replace the spray control system.

In some embodiments, the control circuitry 12 and/or a communication node at the charging station 40 may be configured to communicate wirelessly with an electronic device 42 (e.g., a personal computer, a cloud based computer, server, mobile telephone, PDA, tablet, smart phone, and/or the like) of a remote operator 44 (or user) via wireless links 46 associated with a wireless communication network 48. The wireless communication network 48 may provide operable coupling between the remote operator 44 and the robotic vehicle 10 via the electronic device 42, which may act as a remote control device for the robotic vehicle 10 or may receive data indicative or related to the operation of the robotic vehicle 10 to enable consumption of information or provision of instructions for the robotic vehicle 10 or charging station 40 at the electronic device 42. However, it should be appreciated that the wireless communication network 48 may include additional or internal components that facilitate the communication links and protocols employed. Thus, some portions of the wireless communication network 48 may employ additional components and connections that may be wired and/or wireless. For example, the charging station 40 may have a wired connection to a computer or server that is connected to the wireless communication network 48, which may then wirelessly connect to the electronic device 42. As another example, the robotic vehicle 10 may wirelessly connect to the wireless communication network 48 (directly or indirectly) and a wired connection may be established between one or more servers of the wireless communication network 48 and a PC of the remote operator 44. In some embodiments, the wireless communication network 48 may be a data network, such as a local area network (LAN), a metropolitan area network (MAN), a wide area network (WAN) (e.g., the Internet), and/or the like, which may couple the robotic vehicle 10 to devices such as processing elements (e.g., personal computers, server computers or the like) or databases. Accordingly, communication between the wireless communication network 48 and the devices or databases (e.g., servers, electronic device 42, control circuitry 12) may be accomplished by either wireline or wireless communication mechanisms and corresponding protocols.

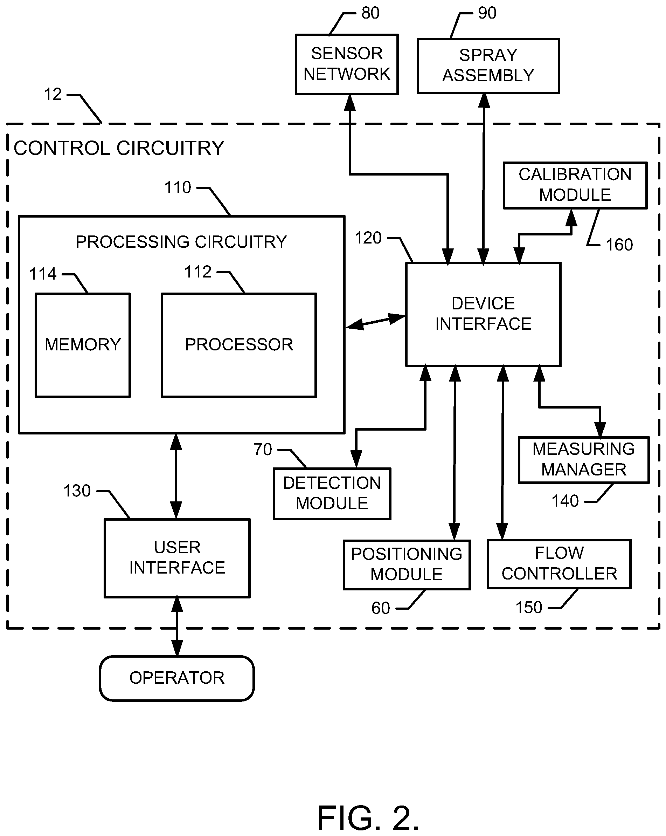

FIG. 2 illustrates a block diagram of various components of the control circuitry 12 to illustrate some of the components that enable or enhance the functional performance of the robotic vehicle 10 and to facilitate description of an example embodiment. In some example embodiments, the control circuitry 12 may include or otherwise be in communication with a vehicle positioning module 60, and a detection module 70 (e.g., for detecting objects, borders and/or the like). The vehicle positioning module 60 and the detection module 70 may work together to give the robotic vehicle 10 a comprehensive understanding of its environment, and enable it to be operated autonomously with or without boundary wires.

In an example embodiment, the vehicle positioning module 60 and the detection module 70 may be part of a sensor network 80 of the robotic vehicle 10. However, in some cases, the vehicle positioning module 60 and the detection module 70 may be separate from, but in communication with, the sensor network 80 to facilitate operation of each respective module. The control circuitry 12 may further include or otherwise be in communication with a measuring manager 140, a flow controller 150 and a calibration module 160, as described in greater detail below.

In some examples, the sensor network 80 may include a camera other imaging device, a moisture detector, humidity detector, and/or a thermometer or other ambient or surface temperature sensor. The camera may capture or record image data in the visible light spectrum or in other portions of the electromagnetic spectrum (e.g., IR camera). The robotic vehicle 10 may also include one or more functional components of a spray assembly 90 (described in greater detail below), which may be controlled by the control circuitry 12 or otherwise be operated in connection with the operation of the robotic vehicle 10. Although not shown in FIG. 2, other functional components of the robotic vehicle 10 may include a wheel assembly (or other mobility assembly components), a fluid tank (which may be part of the spray assembly), and/or other such devices.

The control circuitry 12 may include processing circuitry 110 that may be configured to perform data processing or control function execution and/or other processing and management services according to an example embodiment of the present invention. In some embodiments, the processing circuitry 110 may be embodied as a chip or chip set. In other words, the processing circuitry 110 may comprise one or more physical packages (e.g., chips) including materials, components and/or wires on a structural assembly (e.g., a baseboard). The structural assembly may provide physical strength, conservation of size, and/or limitation of electrical interaction for component circuitry included thereon. The processing circuitry 110 may therefore, in some cases, be configured to implement an embodiment of the present invention on a single chip or as a single "system on a chip." As such, in some cases, a chip or chipset may constitute means for performing one or more operations for providing the functionalities described herein.

In an example embodiment, the processing circuitry 110 may include one or more instances of a processor 112 and memory 114 that may be in communication with or otherwise control a device interface 120 and, in some cases, a user interface 130. As such, the processing circuitry 110 may be embodied as a circuit chip (e.g., an integrated circuit chip) configured (e.g., with hardware, software or a combination of hardware and software) to perform operations described herein. However, in some embodiments, the processing circuitry 110 may be embodied as a portion of an on-board computer. In some embodiments, the processing circuitry 110 may communicate with electronic components and/or sensors of the robotic vehicle 10 via a single data bus. As such, the data bus may connect to a plurality or all of the switching components, sensory components and/or other electrically controlled components of the robotic vehicle 10. However, it should be noted that the processing circuitry 110 may be located at other locations in the system, or may even be distributed in some cases. Thus, for example, in some cases, the processing circuitry 110 and corresponding functions described herein may be located at a remote server (or the electronic device 42), and some of the calculations or determinations described herein may be performed thereat. Communication via the wireless communication network 48 may then enable functions involving remote calculations or determinations to be performed locally at the charging station 40 or the robotic vehicle 10.

The processor 112 may be embodied in a number of different ways. For example, the processor 112 may be embodied as various processing means such as one or more of a microprocessor or other processing element, a coprocessor, a controller or various other computing or processing devices including integrated circuits such as, for example, an ASIC (application specific integrated circuit), an FPGA (field programmable gate array), or the like. In an example embodiment, the processor 112 may be configured to execute instructions stored in the memory 114 or otherwise accessible to the processor 112. As such, whether configured by hardware or by a combination of hardware and software, the processor 112 may represent an entity (e.g., physically embodied in circuitry - in the form of processing circuitry 110) capable of performing operations according to embodiments of the present invention while configured accordingly. Thus, for example, when the processor 112 is embodied as an ASIC, FPGA or the like, the processor 112 may be specifically configured hardware for conducting the operations described herein. Alternatively, as another example, when the processor 112 is embodied as an executor of software instructions, the instructions may specifically configure the processor 112 to perform the operations described herein.

In an example embodiment, the processor 112 (or the processing circuitry 110) may be embodied as, include or otherwise control the vehicle positioning module 60, the detection module 70, the measuring manager 140, the flow controller 150, the calibration module 160 and/or the spray assembly 90. As such, in some embodiments, the processor 112 (or the processing circuitry 110) may be said to cause each of the operations described in connection with the vehicle positioning module 60, the detection module 70, the measuring manager 140, the flow controller 150, the calibration module 160 and/or the spray assembly 90 by directing the vehicle positioning module 60, the detection module 70, the measuring manager 140, the flow controller 150, the calibration module 160 and/or the spray assembly 90, respectively, to undertake the corresponding functionalities responsive to execution of instructions or algorithms configuring the processor 112 (or processing circuitry 110) accordingly. These instructions or algorithms may configure the processing circuitry 110, and thereby also the robotic vehicle 10, into a tool for driving the corresponding physical components for performing corresponding functions in the physical world in accordance with the instructions provided.

In an exemplary embodiment, the memory 114 may include one or more nontransitory memory devices such as, for example, volatile and/or non-volatile memory that may be either fixed or removable. The memory 114 may be configured to store information, data, applications, instructions or the like for enabling the vehicle positioning module 60, the detection module 70, the measuring manager 140, the flow controller 150, the calibration module 160 and/or the spray assembly 90 to carry out various functions in accordance with exemplary embodiments of the present invention. For example, the memory 114 could be configured to buffer input data for processing by the processor 112. Additionally or alternatively, the memory 114 could be configured to store instructions for execution by the processor 112. As yet another alternative, the memory 114 may include one or more databases that may store a variety of data sets responsive to input from various sensors or components of the robotic vehicle 10. Among the contents of the memory 114, applications may be stored for execution by the processor 112 in order to carry out the functionality associated with each respective application.

The applications may include applications for controlling the robotic vehicle 10 relative to various operations including determining an accurate position of the robotic vehicle 10 (e.g., using one or more sensors of the vehicle positioning module 60). Alternatively or additionally, the applications may include applications for controlling the robotic vehicle 10 relative to various operations including determining the existence and/or position of obstacles (e.g., static or dynamic) and borders relative to which the robotic vehicle 10 must navigate (e.g., using one or more sensors of the detection module 70). Alternatively or additionally, the applications may include applications for controlling the robotic vehicle 10 relative to various operations including application of deicing fluid over the service area 20 during operation of the robotic vehicle 10 relative to the service area 20.

The user interface 130 (if implemented) may be in communication with the processing circuitry 110 to receive an indication of a user input at the user interface 130 and/or to provide an audible, visual, mechanical or other output to the user. As such, the user interface 130 may include, for example, a display, one or more buttons or keys (e.g., function buttons), and/or other input/output mechanisms (e.g., microphone, speakers, cursor, joystick, lights and/or the like).

The device interface 120 may include one or more interface mechanisms for enabling communication with other devices either locally or remotely. In some cases, the device interface 120 may be any means such as a device or circuitry embodied in either hardware, or a combination of hardware and software that is configured to receive and/or transmit data from/to sensors or other components in communication with the processing circuitry 110. In some example embodiments, the device interface 120 may provide interfaces for communication of data to/from the control circuitry 12, the vehicle positioning module 60, the detection module 70, the measuring manager 140, the flow controller 150, the nozzle classifier 160, the sensor network 80, the spray assembly 90 and/or other functional components via wired or wireless communication interfaces in a real-time manner, as a data package downloaded after data gathering or in one or more burst transmission of any kind.

Each of the vehicle positioning module 60, the detection module 70, the measuring manager 140, the flow controller 150, and the calibration module 160 may be any means such as a device or circuitry embodied in either hardware, or a combination of hardware and software that is configured to perform the corresponding functions described herein. Thus, the modules may include hardware and/or instructions for execution on hardware (e.g., embedded processing circuitry) that is part of the control circuitry 12 of the robotic vehicle 10. The modules may share some parts of the hardware and/or instructions that form each module, or they may be distinctly formed. As such, the modules and components thereof are not necessarily intended to be mutually exclusive relative to each other from a compositional perspective.

The vehicle positioning module 60 (or "positioning module") may be configured to utilize one or more sensors (e.g., of the sensor network 80) to determine a location of the robotic vehicle 10 and direct continued motion of the robotic vehicle 10 to achieve appropriate coverage of the service area 20. As such, the robotic vehicle 10 (or more specifically, the control circuitry 12) may use the location information to determine a vehicle track and/or provide full coverage of the service area 20 to ensure the entire parcel is deiced (or otherwise serviced). The vehicle positioning module 60 may therefore be configured to direct movement of the robotic vehicle 10, including the speed and direction of the robotic vehicle 10. The vehicle positioning module 60 may also employ such sensors to attempt to determine an accurate current location of the robotic vehicle 10 on the service area 20. The vehicle positioning module 60 may further enable the control circuitry 12 to determine an amount of deicing fluid applied to each portion of the service area 20 as described in greater detail below.

Various sensors of sensor network 80 of the robotic vehicle 10 may be included as a portion of, or otherwise communicate with, the vehicle positioning module 60 to, for example, determine vehicle speed/direction, vehicle location, vehicle orientation and/or the like. Sensors may also be used to determine motor run time, machine work time, and other operational parameters. In some embodiments, positioning and/or orientation sensors (e.g., GPS receiver, real time kinematic (RTK) - GPS receiver, GLONASS, Galileo, GNSS, and/or the like and/or an accelerometer) may be included to monitor, display and/or record data regarding vehicle position and/or orientation as part of the vehicle positioning module 60. The sensor network 80 may also include devices for measuring ambient temperature, surface temperature, moisture, humidity, nozzle differential pressure, pump pressure, flow rate, and other values pertinent to the operation of the robotic vehicle 10.

In an example embodiment, the detection module 70 may be configured to utilize one or more sensors (e.g., of the sensor network 80) to detect objects and/or boundaries that are located in the area around the robotic vehicle 10 to enable the robotic vehicle 10 to identify the objects or boundaries with or without physically contacting them. Thus, the detection module 70 may enable object avoidance as well as allow the robotic vehicle 10 to avoid contact with boundaries, buildings, fences, and/or the like while covering the service area 20. As such, the robotic vehicle 10 (or more specifically, the control circuitry 12) may object/boundary detection information to alter a track of the robotic vehicle 10 and/or report impediments to providing full coverage of the service area 20. The detection module 70 may therefore be configured to detect static (i.e., fixed or permanent) and/or dynamic (i.e., temporary or moving) objects in the vicinity of the robotic vehicle 10. In some cases, the detection module 70 may be further configured to classify or identify the objects detected (e.g., by type, as known or unknown, as static or dynamic objects, as specific objects, and/or the like). Moreover, in some cases, the detection module 70 may interact with the vehicle positioning module 60 to utilize one or more objects to facilitate positioning or boundary definition for the robotic vehicle 10.

Various sensors of sensor network 80 of the robotic vehicle 10 may be included as a portion of, or otherwise communicate with, the detection module 70 to, for example, determine the existence of objects, determine range to objects, determine direction to objects, classify objects, and/or the like. The detection module 70 may also or alternatively enable the robotic vehicle 10 to determine precipitation conditions such as the existence of rain, snow, sleet or ice based on temperature, humidity and/or moisture detection sensors.

The measuring manager 140 may be configured to receive, process and/or communicate various values measured by the sensor network 80 such as, for example, vehicle speed/direction, vehicle location, vehicle orientation, ambient temperature, surface temperature, humidity, moisture, differential pressure, flow and/or other measurements made by the robotic vehicle 10. Moreover, in some example embodiments, the measuring manager 140 may store measurements made (e.g., in the memory 114) in order to enable historical analysis of information stored and/or to enable trends to be determined and calibration to be performed by the calibration module 160. In this regard, for example, the measuring manager 140 may be configured to store information on flow rates (directly or indirectly measured) to determine when flow rates are changing or have changed by predetermined amounts. The aging of components, clogging of components or wearing of components over time may impact the operation of such components. Thus, for example, flow rates may change over time as a function of the impacts of the changes mentioned above thereby rendering flow rate measurements inaccurate, and consequently also rendering estimates as to how much deicing solution has been applied to be inaccurate. This can lead to too much or too little deicing solution being applied to the service area 20.

The flow controller 150 may be configured to determine the flow rate of application of deicing solution so that the density of application of the deicing solution can be known and/or controlled. In this regard, in some cases, the flow controller 150 may be used to calculate a rate of application of the deicing solution or solution density that is desirable based on weather conditions and/or weather forecasts. The application rate or solution density could be consistent over the entire service area 20, or may change for different parts of the service area 20 (e.g., the walkway 22 or the transition region 24). Start and end times for the application of deicing solution may also be determined by the flow controller 150 based on current conditions (e.g., measured at the sensor network 80 of the robotic vehicle 10 itself during transit of the service area 20 or while docked at the charging station 40) or forecasted conditions. In some cases, the flow controller 150 may be a part of the spray assembly 90. However, in other examples, the spray assembly 90 and flow controller 150 may be separate components, and may be capable of communication with each other.

In an example embodiment, the flow controller 150 may include executable applications, tables or equations that configure the flow controller 150 to determine, for provided weather forecasts or estimates of temperature, precipitation and corresponding time periods for which the temperature and precipitation will be applicable, the density of deicing solution that should be applied and/or timing of such application. The flow controller 150 may also be configured to interface with various components of the robotic vehicle 10 as discussed in greater detail below in order to control the flow rate or density of application of the deicing solution while the robotic vehicle 10 traverses the service area 20.

The calibration module 160 may be configured to calibrate the spray assembly 90 (e.g., the nozzle or nozzles thereof) to ensure that deicing solution waste does not occur, and that underspraying also does not occur. In this regard, with accurate flow measurement by the measuring manager 140, as discussed in greater detail below, the calibration module 160 may be configured to automatically and periodically conduct calibration of flow rate on the fly in order to maximize spraying accuracy at all times. The calibration module 160 may also or alternatively utilize activities that involve interaction with the user to conduct calibration activities. For example, the user may fill the deicing solution to a calibrated fill line in the storage tank 14. The time it takes to empty the storage tank 14 (e.g., to a predefined level or completely) may then be measured (e.g., by the measuring manager 140) to determine the flow rate. The determined flow rate may then be compared to the measured flow rate in order to calibrate the measuring devices involved in measuring the flow rate (e.g., of the measuring manager 140 and sensor network 80).

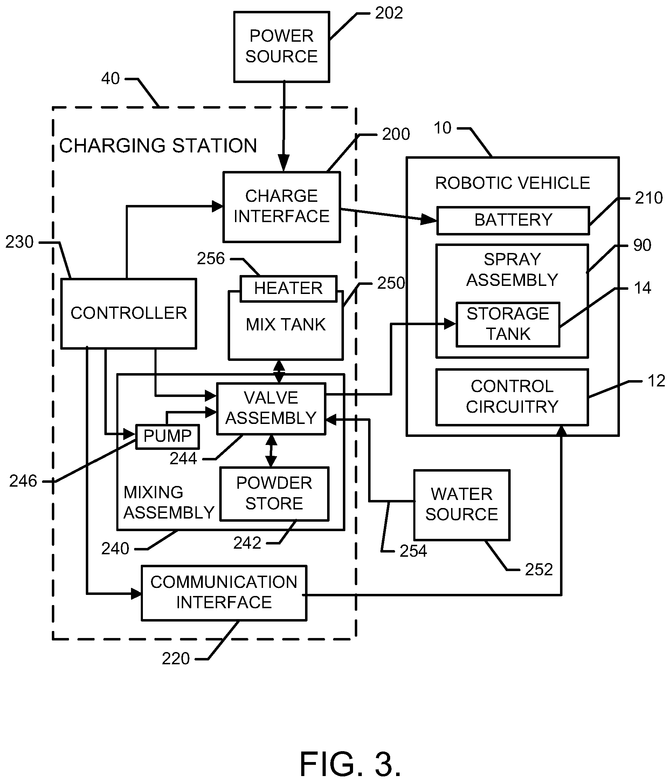

FIG. 3 is a block diagram of the charging station 40 of an example embodiment. The charging station 40 may include a charge interface 200, which includes structures and electronic components to interface with a power source 202 and a battery 210 of the robotic vehicle 10 in order to charge the battery 210 from the power source 202. The charging station 40 and the charge interface 200 may be arranged to enable the robotic vehicle 10 to drive into or proximate to the charging station 40 and engage with the charge interface 200 when parked in or at the charging station 40. For example, the robotic vehicle 10 may be guided or otherwise enter into proximity with the charging station 40 in a manner that engages charging contacts on the charge interface 200 and the robotic vehicle 10 to enable power from the power source 202 to be used to charge the battery 210 of the robotic vehicle 10. However, wireless charging of the battery 210 is also possible in some example embodiments where the charge interface 200 is configured to wireless charging.

In some cases, the charging station 40 may also be capable of communication (wired or wireless) with the robotic vehicle 10 to exchange information with and/or provide instructions to the robotic vehicle 10. In this regard, for example, the charging station 40 may include a communication interface 220 that is capable of wireless or wired communication with the control circuitry 12. The communication may include the provision of instructions to the robotic vehicle 10 and/or extraction of data from the robotic vehicle 10. In some cases, the data extracted may include sensor data obtained by the sensor network 80, and such data may be communicated to the electronic device 42 via the wireless communication network 48 (via wireless links 46).

In an example embodiment, the charging station 40 may include a controller 230. The controller 230 may include processing circuitry, which may be similar in form or structure (or at least functional capability) to the processing circuitry 110 described above in connection with the description of FIG. 2. Thus, the details of the structure and function of the controller 230 will not be repeated. The controller 230 may be configured to control communications associated with the communication interface 220 and/or control operations of the charge interface 200. However, in some cases, the charging station 40 may not include the communication interface 220 and/or the controller 230. In such examples, the corresponding components of the charging station 40 may be operated manually or locally by the operator.

In an example embodiment, the charging station 40 may also be configured to provide the deicing solution to the robotic vehicle 10. Thus, for example, the deicing solution may be transferred to the storage tank 14 of the robotic vehicle 10 while the robotic vehicle 10 is charging (or at least while the robotic vehicle 10 is operably coupled to the charging station 40). The transfer of deicing solution to the storage tank 14 may therefore happen simultaneous with charging, or sequentially before or after charging of the battery 210. A mixing assembly 240 may be included at the charging station 40 to enable mixing and creation of the deicing solution prior to provision of the deicing solution to the storage tank 14.

The mixing assembly 240 may include a mixing powder store 242, which may be a tank, container, or other holding apparatus in which a mixing powder (or simply "powder") or other dry mixing material that mixes with water (or another liquid medium) to form the deicing solution in a mix tank 250. In an example embodiment water provision to the mix tank 250 may be controlled by a valve assembly 244 of the mixing assembly 240. The valve assembly 244 may include electronically (or manually) controlled valves that direct flow from a water source 252 into the mix tank 250. Alternatively or additionally, the valve assembly 244 may be used to control flow from the mix tank 250 to the storage tank 14 and/or within the mix tank 250.

In some examples, the water source 252 may be attached to the mix tank 250 or the valve assembly 244 via a hose connection 254. The hose connection 254 may be a common water hose, or may be heated to prevent freezing in cold temperatures. If not heated, the hose connection 254 may be manually attached for filling from the water source 252 and then disconnected thereafter in order to avoid freezing of water in the hose connection 254. The valve assembly 244 may include a fill alignment in which the valves of the valve assembly 244 are positioned to enable water to flow from the water source 252 (e.g., a spigot attached to a pressurized water supply) to the mix tank 250. In some cases, such flow may transition through the mixing powder store 242 to transfer the mixing powder therein into the mix tank 250. However, in other cases, the valve assembly 244 may include one or more valves that can be aligned to allow the mixing powder to fall into the mix tank 250 (e.g., via gravity). In still other cases, the operator may simply pour or add the mixing powder directly into the mix tank 250 so that no mixing powder store 242 is needed at all.

Alternatively or additionally, the valve assembly 244 may have a transfer alignment in which the valves of the valve assembly 244 are positioned to enable deicing solution to flow from the mix tank 250 to the storage tank 14. Flow may be driven by a pump 246 of the mixing assembly 240. As yet another alternative or addition, the valve assembly 244 may have a freshening or mixing alignment in which valves of the valve assembly 244 are positioned to enable deicing solution to flow internally in the mix tank 250. The mixing alignment may, in some cases, rely on the pump 246 of the mixing assembly 240 to provide motive force for moving deicing solution within the mix tank 250. The movement of deicing solution in the mixing alignment may ensure proper mixing of the mixing powder with water to form the deicing solution. The movement of deicing solution may also prevent settling of the mixing powder, or otherwise prevent the mixing powder from coming out of solution, to keep the deicing solution properly mixed and ready for use. Yet another potential advantage of the movement of the deicing solution in the mixing alignment may be to prevent freezing of the deicing solution in very low temperatures. However, in some examples, a heater 256 may be provided at the mix tank 250 in order to heat the solution therein and prevent freezing.

As can be appreciated from the description above, the deicing solution may be prepared at the charging station 40 for transfer to the robotic vehicle 10 during charging of the battery 210 of the robotic vehicle 10. However, it may also be possible to arrange the charging station 40 to interface directly with the storage tank 14 while the robotic vehicle 10 is docked at the charging station 40. In such an example, the storage tank 14 may, while docked, be operably coupled to the valve assembly 244, pump 246, and/or mixing powder store 242 instead of the mix tank 250. Thus, for example, the storage tank 14 and mix tank 250 may effectively be the same component when the robotic vehicle 10 is docked.

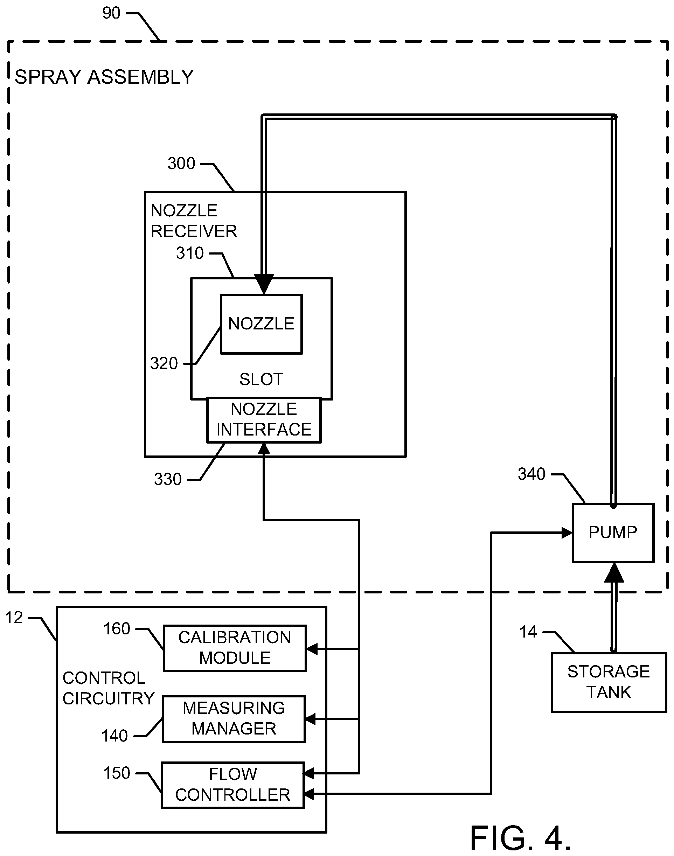

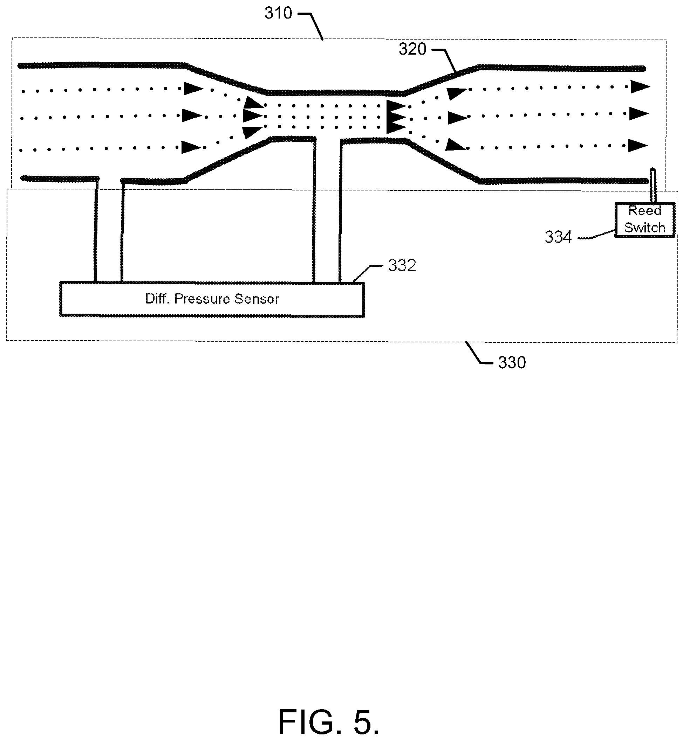

FIG. 4 illustrates a block diagram of components of the spray assembly 90 in greater detail, and FIG. 5 illustrates a schematic view of portions of the spray assembly 90 in greater detail. In this regard, the spray assembly 90 may include a nozzle receiver 300 having a slot 310 inside which a nozzle 320 may be retained or received. The slot 310 may also include a nozzle interface 330 including contacts, components and/or the like for enabling electrical interface with the nozzle 320 for flow rate determinations. The spray assembly 90 may also include a pump 340 configured to pump deicing solution from the storage tank 14 through the pump 340 and out the nozzle 320 to be applied to the service area 20.

Although flow rate of the nozzle 320 could be determined with a single sensor (e.g., a pressure sensor), the accuracy of the sensor may decrease as components wear or become damaged or clogged. The nozzle interface 330 may therefore include a differential pressure sensor 332 that may be disposed on either side of an orifice having a known diameter. Using Bernoulli's principal along with known user selected fluid properties, it may be possible to calculate the flow rate more accurately, and in such a way that component wear, damage or clogging does not reduce the accuracy of the measurement. In the example of FIG. 5, the differential pressure sensor 332 may measure a difference in pressure across a restriction (e.g., a venturi contraction) formed in the nozzle 320, and having a known diameter. The differential pressure sensor 332 may therefore also be a portion of the sensor network 80, and may communicate measurements to the measuring manager 140. The measuring manager 140 may take the raw data and calculate a flow rate for sharing with the flow controller 150 and/or the calibration module 160.

In an example embodiment, the flow controller 150 may be configured to control the pump 340 and/or the speed of the robotic vehicle 10 in order to control the application rate of the deicing solution and therefore the density of the deicing solution applied to the service area 20. Although not required, the nozzle interface 330 may also include an in-line component to measure the flow out of the nozzle 320. Accordingly, for example, a microswitch or reed switch 334 may be placed in the outgoing stream from the nozzle 320. The reed switch 334 may be enabled to detect when spray is exiting the nozzle 320 about a threshold amount, the reed switch 334 may be activated to provide feedback to the measuring manager 140 to indicate that the nozzle 320 is properly working to eject spray therefrom. The reed switch 334 may be mounted outside the flow path, but may include an extension portion that be spring loaded, or otherwise be a flexible component, and extended into the flow path so that the extension portion is only activated in the presence of sufficient flow to deflect the extension portion and overcome biasing that otherwise maintains the reed switch 334 in a rest (deactivated) position. Given that pressure sensors or flow detectors may become unreliable as the deicing material (which may be slightly corrosive) passes therethrough for a long period of time, the reed switch 334 may provide a cost effective way to provide accurate feedback regarding the operability of the nozzle 320.

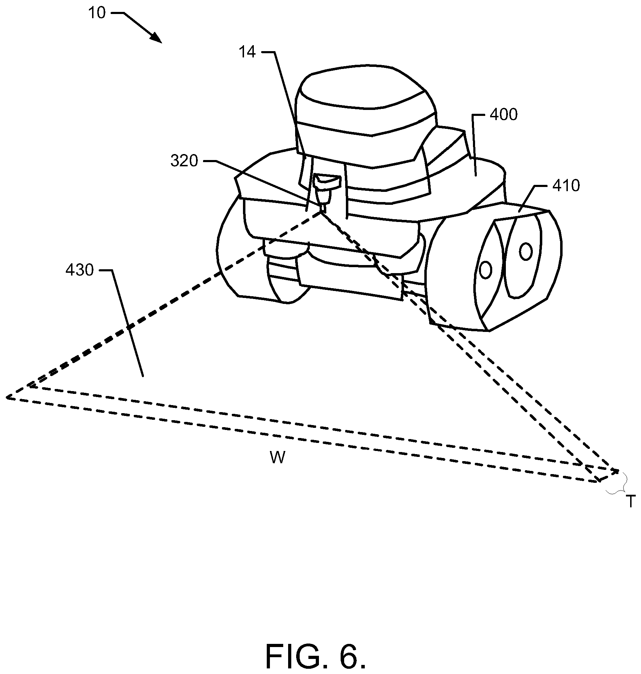

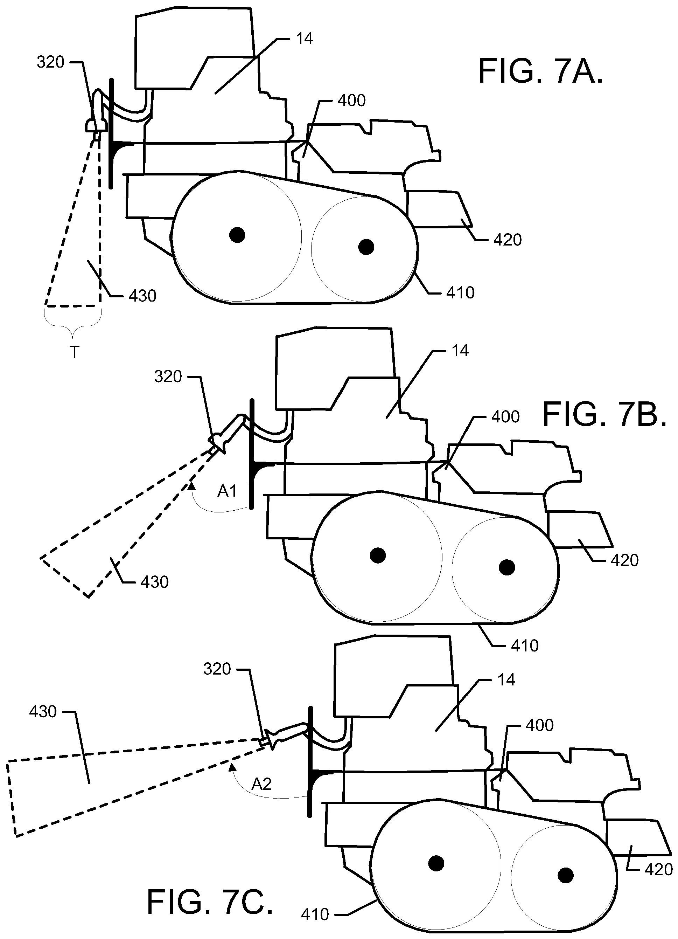

FIG. 6 illustrates a perspective view of the robotic vehicle 10 in accordance with an example embodiment. FIG. 7, which is defined by FIGS. 7A, 7B and 7C, illustrates side views of the robotic vehicle 10. As shown in FIGS. 6 and 7, the robotic vehicle 10 may include a chassis 400 supported by a mobility assembly 410. **In** this example, the mobility assembly 410 includes continuous tracks. However, other means of propulsion may be employed in alternative embodiments (e.g., wheels). The robotic vehicle 10 may include a charging interface 420 disposed at one end thereof (e.g., a front end) and the nozzle 320 may be disposed at another end thereof (e.g., a rear end). The charging interface 420 may include one or more contacts that come into slidable contact with the charge interface 200 of the charging station 40 when the robotic vehicle 10 docks in the charging station 40.

FIGS. 6 and 7 illustrate a spray pattern 430 that may result from expelling the deicing solution from the nozzle 320. The spray pattern 430 may have a width (W) that is measured transversely with respect to the longitudinal centerline of the robotic vehicle 10 and a thickness (T) that is measured in the same direction as the longitudinal centerline of the robotic vehicle 10. As shown in FIGS. 6 and 7, the width (W) is substantially larger than the thickness (T). The spray pattern 430 may have a general shape determined by the nozzle 320 and the amount of pressure generated by the pump 340. As can be appreciated from the descriptions above, by knowing the flow rate of deicing solution through the nozzle 320, and further knowing the speed of the robotic vehicle 10 over the service area 20, a density or amount of deicing solution applied to the overall surface of the service area 20 may likewise be known. Moreover, the density or amount of deicing solution applied can also be controlled by controlling one or both of the pressure of the pump 340 and the speed of movement of the robotic vehicle 10.

As noted above, the pressure generated by the pump 340 may dictate the shape (and therefore the width (W) and/or the thickness (T) of the spray pattern 430. Accordingly, the flow controller 150 may be configured to select a pump pressure based on location within the service area 20 to achieve desired spray pattern characteristics. As an example, to minimize the number of passes it takes to cover the main portion of the service area 20, a high pump pressure may be selected. However, for the walkway 22, a pump pressure may be selected to achieve the most efficient and/or accurate coverage of the walkway 22. Thus, for example, if the width (W) of the spray pattern 430 can range from 2 feet to 4 feet, and the walkway 22 has a width of 4 feet, the flow controller 150 may select a maximum pump pressure to achieve a 4 foot width (W) for the spray pattern 430 to cover the walkway accurately with a single pass. However, if the walkway 22 has a width of 6 feet, the flow controller 150 may strategically select a medium pump pressure to achieve a 3 foot width (W) for the spray pattern 430 to cover the walkway accurately with exactly two passes.

The measuring manager 140 may gather information associated with (and therefore also determine) the flow rate. The measuring manager 140 may also gather information associated with the speed of the robotic vehicle 10. The measuring manager 140 may provide such information to the flow controller 150 to enable the flow controller 150 to determine instructions to either the pump 340 or the positioning module 60 (or both) to provide control over the density of the application of the deicing solution.

In an example embodiment, the nozzle 320 may have a fixed orientation similar to the orientation shown in FIG. 6. Thus, the spray pattern 430 may extend behind the robotic vehicle 10 as the robotic vehicle 10 moves about the service area 20. However, it may also be possible to place the nozzle 320 in the front of the robotic vehicle 10 and/or to have the orientation of the nozzle 320 be variable or movable. FIG. 7 illustrates an example in which the nozzle 320 can be rotated (e.g., via the nozzle interface 330) in orientation to direct the spray pattern 430 not just downward (as shown in FIGS. 6 and 7A). In this regard, as shown in FIG. 7B, the nozzle 320 may rotate to form an angle (A1) with respect to a line normal to the ground over which the robotic vehicle 10 operates. The nozzle 320 may even be rotated to form angle (A2), which may be nearly horizontal (i.e., nearly perpendicular to the line normal to the ground). The nozzle interface 330 may include a small motor to automatically rotate the nozzle 320, or may include different rotational positions that the operator can manually adjust to achieve the desired angle for spraying. For example, the operator may loosen a retaining nut to free the nozzle 320 to be rotated about an axis parallel to the ground, and then tighten the retaining nut when the desired angle is achieved.

By adjusting the nozzle 320 to or beyond the angles (A1) and (A2), areas beyond the immediate vicinity of the robotic vehicle 10 can be sprayed. Thus, for example, the robotic vehicle 10 may reach areas like the transition region 24 of FIG. 1. Thus, for example, the robotic vehicle 10 may back up to the edge of the transition region 24 (which cannot be traversed by the robotic vehicle 10). The robotic vehicle 10 may then rotate the nozzle 320 as shown in FIGS. 7B and 7C to reach the entirety of the stairs that form the transition region 24. In some cases, the pressure of the pump 340 may be increased as the angle increases (e.g., with max pressure for the situation shown in FIG. 7C) in order to increase the distance that the spray pattern 430 can be projected to fully cover stairs or other non-traversable transition regions.

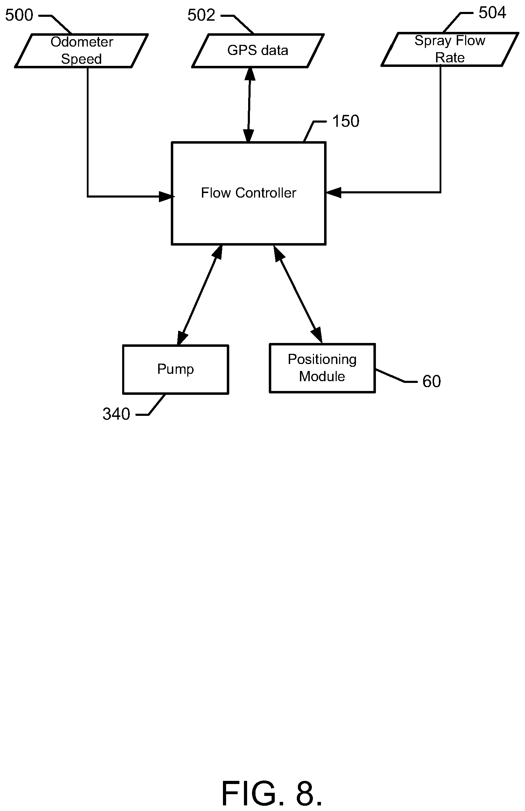

FIG. 8 illustrates a block diagram of information processing that may occur at the flow controller 150 in accordance with an example embodiment. In this regard, the flow controller 150 may receive speed information in the form of either or both of odometer speed 500 and GPS data 502 from the measuring manager 140. The GPS data 502 may also or alternatively include location information, so the flow controller 150 may have information indicative of the specific locations already covered by the robotic vehicle 10. The flow controller 150 may further be provided with spray flow rate 504 as determined by the measuring manager 140. By knowing the spray flow rate 504, the speed and location of the robotic vehicle 10 and the spray pattern 430, the flow controller 150 can determine which portions of the service area 20 have already been covered with deicing solution, and by how much. Moreover, if programmed or instructed to apply a specific amount of deicing solution to certain locations or areas, the flow controller 150 may instruct the pump 340 and/or positioning module 60 to change speed or pump pressure to achieve the desired spray flow rate 504 and corresponding time spent at each location to achieve the corresponding specific amount of deicing solution at each location or area.

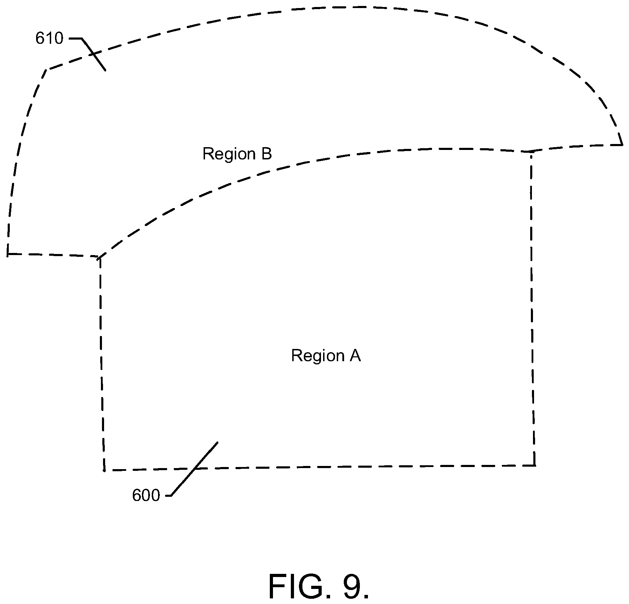

In this regard, as shown in FIG. 9, region A 600 may have a first prescribed solution density and region B 610 may have a second prescribed solution density that is lower than the first prescribed solution density. If the speed of the robotic vehicle 10 is constant while traversing regions A 600 and B 610, the flow controller 150 may direct the pump 340 to increase pump pressure (e.g., by increasing operating speed of the pump 340) while traversing region A 600 to correspondingly increase the application rate of the deicing solution in region A 600. In region B 610, a lower pump pressure may cause a lower application rate of the deicing solution. Meanwhile, if the pump 340 has a fixed speed or output pressure, the flow controller 150 may direct the positioning module 60 to slow the speed of the robotic vehicle 10 in region A so that region A 600 receives a higher amount of the deicing solution than region B 610. As noted above, combinations of controlling the pump 340 and the positioning module 60 may also be employed in some cases.

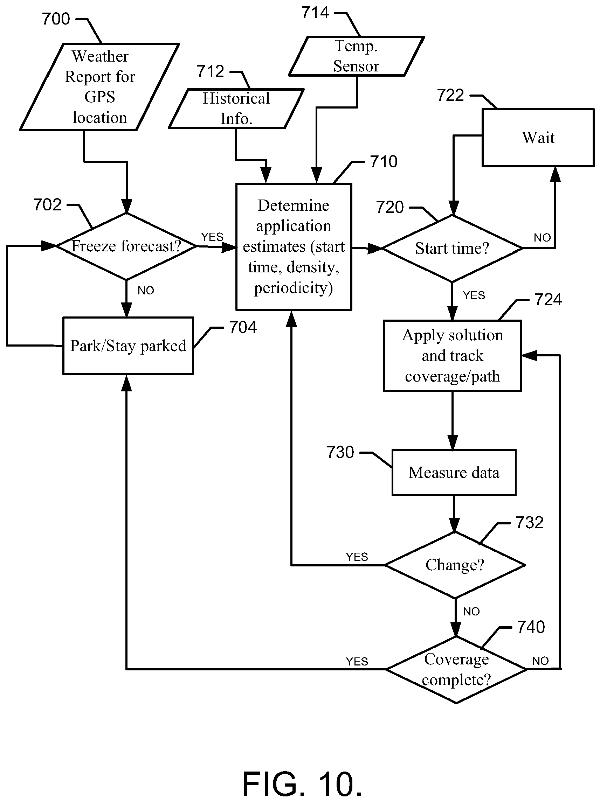

FIG. 10 illustrates a block diagram of operation of a robotic vehicle in a system according to an example embodiment. Thus, for example, FIG. 10 shows various operations that may be executed by the control circuitry 12 of the robotic vehicle 10. However, in some cases, the controller 230 of the charging station 40 or even a remote server or computer may perform the actions of FIG. 10 and then send operational instructions to the robotic vehicle 10 accordingly, to drive operations of the robotic vehicle 10. Moreover, in some examples, the flow controller 150 may perform the calculations and determinations discussed in reference to FIG. 10. In any case, the operations may constitute an application including executable instructions that are executed by processing circuitry (e.g., processing circuitry 110 of FIG. 2) either at the charging station 40 or at the robotic vehicle 10.

The operations (or application) may include the initial receipt of a weather report associated with a location (e.g., based on GPS) of the service area 20 at operation 700. A determination may then be made as to whether or not a freeze is in the forecast at operation 702. If no freeze is forecast, the robotic vehicle 10 may park or remain parked at the charging station 40 at operation 704. However, if a freeze is forecast, then a determination may be made of solution application estimates at operation 710. The solution application estimates may be generated based on the freeze forecast including an estimated time at which the freezing temperatures will start, a projected change in temperature over a range of applicable times, and precipitation forecast in terms of when, how much, and what type of precipitation to expect. The solution application estimates may then include, based on the weather data described above, corresponding amounts and timing for application of deicing solution.

In some cases, the processing circuitry may further be provided with historical information 712 and temperature sensor information 714 for showing current temperatures. The historical information 712 may be used to weight likely outcomes based on historical performance, and the temperature sensor information 714 may be used to ensure that real temperatures track with those projected since microclimates may exist in certain locations that cause changes relative to forecasts for the general area. If historical information 712 and/or temperature sensor information 714 track with the weather report received, more confidence may be placed in the weather report for calculation of the solution application estimates. However, if historical information 712 and/or temperature sensor information 714 do not track with the weather report received, less confidence may be placed in the weather report for calculation of the solution application estimates and, for example, modifications upward or downward may be made to adjust the solution application estimates.

The solution application estimates may include an estimated start time of application of deicing solution, a density for each region of the service area 20, and/or a periodicity for repeated application of layers of the deicing solution (if applicable). Thus, the processing circuitry may determine when and how much deicing solution to apply to the service area 20. After the start time is determined, the robotic vehicle 10 may wait for the start time to occur. Filling of the deicing solution (if not already done) may be accomplished at this time. At operation 720, a determination may be made as to whether a start time (either for initial application or a periodic application) is reached. If not, the robotic vehicle 10 may wait (e.g., docked at the charging station 40) at operation 722 until the start time is reached. If the start time is reached, then application of the deicing solution 724 may be commenced by the robotic vehicle 10 commencing the spraying of the deicing solution while traversing the service area 20 under control of the positioning module 60 and flow controller 150.

While traversing the service area 20, the sensor network 80 may measure data at operation 730. The data measured may include precipitation amounts, ambient temperature, surface temperature, etc. A determination may then be made at operation 732 as to whether a change (e.g., larger than a threshold amount of change) from the initial solution application estimates is appropriate. In this regard, for example, if the measured ambient temperature is much higher or lower than initially forecast or measured, or if much more or no moisture is detected contrary to initial forecast or measurement, then a change to the solution application estimates may be appropriate and flow may cycle back to operation 710 for recalculation of the solution application estimates. Otherwise, if no change (at least within a threshold) is detected, then a determination may be made at operation 740 as to whether coverage of the service area 20 is complete. If not, then flow may cycle back to operation 724 for continued application of the deicing solution. Otherwise, if coverage is complete, then flow may cycle to operation 704 and the robotic vehicle 10 may park to wait for the next cycle of operation.

Notably, instead of deicing solution, the same strategies and considerations discussed above could alternatively be employed for the spreading of other liquid solutions. Thus, for example, fertilizer, weed killer, pre-emergent, insecticide, water or other solutions could be sprayed using example embodiments. A simple substitution of the corresponding solution for the deicing solution described above may be employed to utilize the robotic vehicle 10 in each of various different useful solution spreading contexts.

In an example embodiment, a robotic vehicle may be provided. The robotic vehicle may include a chassis supporting a storage tank in which an aqueous solution is contained, a mobility assembly operably coupled to the chassis to provide mobility for the robotic vehicle about a service area, a positioning module configured to provide guidance for the robotic vehicle during transit of the robotic vehicle over the service area, a spray assembly and control circuitry. The spray assembly may be operably coupled to the storage tank to spray the aqueous solution during the transit of the robotic vehicle over the service area. The control circuitry may be operably coupled to the spray assembly and positioning module. The control circuitry may also be configured to adjust characteristics of the spray assembly or speed of the mobility assembly to control an amount of the aqueous solution applied to the service area.

The robotic vehicle charging station of some embodiments may include additional features, modifications, augmentations and/or the like to achieve further objectives or enhance performance of the station. The additional features, modifications, augmentations and/or the like may be added in any combination with each other. Below is a list of various additional features, modifications, and augmentations that can each be added individually or in any combination with each other. For example, the spray assembly may include a pump to provide pressure for spraying the aqueous solution. The control circuitry may be configured to maintain a constant pressure of the pump while adjusting the speed of the mobility assembly to control the amount of aqueous solution applied at a given portion of the service area. Alternatively, the control circuitry may be configured to maintain a constant speed of the mobility assembly while adjusting pressure of the pump to control the amount of aqueous solution applied at a given portion of the service area. As yet another alternative, the control circuitry may be configured to adjust both a pressure of the pump and the speed of the mobility assembly to control the amount of aqueous solution applied at a given portion of the service area. **In** an example embodiment, the spray assembly may include a nozzle interface configured to measure a differential pressure across an orifice of a known diameter of a nozzle of the spray assembly to determine a flow rate of the aqueous solution. In some cases, the nozzle interface may further include a reed switch or micro-switch operably coupled to a component in a flow path of the aqueous solution exiting the nozzle to positively confirm flow of the aqueous solution from the nozzle via a feedback signal provided to the control circuitry. In an example embodiment, the processing circuitry may include a calibration module that receives and records the differential pressure measured to monitor for changes in flow rate of the nozzle over time. In some cases, the calibration module may be configured to compare a measured flow rate to a calculated flow rate to calibrate the spray assembly. In an example embodiment, the calculated flow rate may be determined based on a time taken to empty the storage tank from a first reference fill level to a second reference fill level. In some cases, the spray assembly may include a pump to provide pressure for spraying the aqueous solution, and the spray assembly may include a nozzle interface configured to enable the nozzle to be rotated about an axis substantially parallel to a ground surface to adjust a direction of a spray pattern generated by the spray assembly. In an example embodiment, a pressure of the pump may change (e.g., increase or decrease) as an amount of rotation of the nozzle increases. In some cases, the aqueous solution may be a deicing solution. In an example embodiment, a spray pattern of the spray assembly is adjustable. For example, a shape or width of the spray pattern may be adjustable by adjusting pump speed. In an example embodiment, the control circuitry may be configured to receive weather forecast information and determine solution application estimates including a start time and density of application of the aqueous the control circuitry may be further configured to receive local weather data from a sensor network of the robotic vehicle during the transit of the robotic vehicle over the service area, and determine an adjustment to the solution application estimates based on the local weather data.

## Claims

1. A robotic vehicle (10) configured for spreading an aqueous solution such as deicing solution (724), fertilizer, weed killer, pre-emergent, insecticide, or water over a service area (20), the robotic vehicle (10) comprising:
a chassis (400) supporting a storage tank (14) in which the aqueous solution is contained;
a mobility assembly (410) operably coupled to the chassis (400) to provide mobility for the robotic vehicle (10) about a service area (20);
a positioning module (60) configured to provide guidance for the robotic vehicle (10) during transit of the robotic vehicle (10) over the service area (20);
a spray assembly (90) operably coupled to the storage tank (14) to spray the aqueous solution during the transit of the robotic vehicle (10) over the service area (20); and
control circuitry (12) operably coupled to the spray assembly (90) and positioning module (60), the control circuitry (12) being configured to adjust characteristics of the spray assembly (90) or speed of the mobility assembly (410) to control an amount of the aqueous solution applied to the service area (20,)
the spray assembly (90) comprising a pump (340) operably coupled to the storage tank (14), a nozzle (320) operably coupled to the storage tank (14) via the pump (340) to generate a spray pattern (430) for spraying the aqueous solution responsive to operation of the pump (340) as the robotic vehicle (10) transits the service area (20), and a flow controller (150), wherein the flow controller (150) includes processing circuitry (110), and is configured to adjust the characteristics of the pump (340) or speed of the robotic vehicle (10) to control the amount of the aqueous solution applied to the service area (20);
**characterised in that**
the spray assembly (90) comprises a nozzle interface (330) that is configured to measure a differential pressure across an orifice of a known diameter of the nozzle (320) of the spray assembly (90) to determine a flow rate of the aqueous solution; and
the nozzle interface (330) comprising a reed switch or micro-switch (334) operably coupled to a component in a flow path of the aqueous solution exiting the nozzle (320) to positively confirm flow of the aqueous solution from the nozzle (320) via a feedback signal provided to the control circuitry (12).

2. The robotic vehicle (10) of claim 1, wherein the spray assembly (90) comprises the pump (340) to provide pressure for spraying the aqueous solution, and
wherein the control circuitry (12) is configured to maintain a constant pressure of the pump (340) while adjusting the speed of the mobility assembly (410) to control the amount of aqueous solution applied at a given portion of the service area (20), or
wherein the control circuitry (12) is configured to maintain a constant speed of the mobility assembly (410) while adjusting pressure of the pump (340) to control the amount of aqueous solution applied at a given portion of the service area (20), or
wherein the control circuitry (12) is configured to adjust both a pressure of the pump (340) and the speed of the mobility assembly (410) to control the amount of aqueous solution applied at a given portion of the service area (20).

3. The robotic vehicle (10) of claim 1, wherein the control circuitry (12) comprises a calibration module (160), the calibration module (160) receiving and recording the differential pressure measured to monitor for changes in flow rate of the nozzle (320) over time.

4. The robotic vehicle (1) of claim 3, wherein the calibration module (160) is configured to compare a measured flow rate to a calculated flow rate to calibrate the spray assembly (90), wherein, optionally, the calculated flow rate is determined based on a time taken to empty the storage tank (14) from a first reference fill level to a second reference fill level.

5. The robotic vehicle (10) of claim 1, wherein the control circuitry (12) comprises a calibration module (160) configured to compare a measured flow rate of a flow meter to a calculated flow rate to calibrate the spray assembly (90).

6. The robotic vehicle (10) of claim 1, wherein the spray assembly (90) comprises the pump (340) to provide pressure for spraying the aqueous solution, and
wherein the nozzle interface (330) is configured to enable the nozzle (320) to be rotated about an axis substantially parallel to a ground surface to adjust a direction of a spray pattern (430) generated by the spray assembly (90),wherein, optionally, a pressure of the pump (340) changes as an amount of rotation of the nozzle (320) increases.

7. The robotic vehicle (10) of claim 1, wherein the aqueous solution is a deicing solution (724).

8. The robotic vehicle (10) of claim 1, wherein a spray pattern (430) of the spray assembly (90) is adjustable.

9. The robotic vehicle (10) of claim 8, wherein a shape or width (W) of the spray pattern (90) is adjustable by adjusting pump speed.

10. The robotic vehicle (10) of claim 1, wherein the control circuitry (12) is configured to receive weather forecast information and determine solution application estimates including a start time and density of application of the aqueous solution on the service area (20) based on the weather forecast information.

11. The robotic vehicle (10) of claim 10, wherein the control circuitry (12) is further configured to receive local weather data from a sensor network (80) of the robotic vehicle (10) during the transit of the robotic vehicle (10) over the service area (20), and determine an adjustment to the solution application estimates based on the local weather data.

## Patentansprüche

1. Roboterfahrzeug (10), ausgebildet zum Ausbringen einer wässrigen Lösung, wie z.B. Enteisungslösung (724), Düngemittel, Unkrautvernichtungsmittel, Vorauflaufmittel, Insektizid oder Wasser über einen Einsatzbereich (20), wobei das Roboterfahrzeug (10) umfasst:
ein Fahrgestell (400), das einen Vorratstank (14) trägt, in dem die wässrige Lösung enthalten ist;
eine Mobilitätsbaugruppe (410), die funktionsfähig mit dem Fahrgestell (400) verbunden ist, um dem Roboterfahrzeug (10) Mobilität in einem Einsatzbereich (20) zu verleihen;
ein Positionierungsmodul (60), das ausgebildet ist, um eine Führung für das Roboterfahrzeug (10) während des Transports des Roboterfahrzeugs (10) über den Einsatzbereich (20) bereitzustellen;
eine Sprühanordnung (90), die funktionsfähig mit dem Vorratstank (14) gekoppelt ist, um die wässrige Lösung während der Fahrt des Roboterfahrzeugs (10) über den Einsatzbereich (20) zu sprühen; und
eine Steuereinheit (12), die funktionsfähig mit der Sprühanordnung (90) und dem Positionierungsmodul (60) gekoppelt ist, wobei die Steuereinheit (12) ausgebildet ist, um die Eigenschaften der Sprühanordnung (90) oder die Geschwindigkeit der Mobilitätsanordnung (410) anzupassen, um eine Menge der auf den Einsatzbereich (20) aufgebrachten wässrigen Lösung zu steuern,
die Sprühanordnung (90) eine Pumpe (340), die betriebsmäßig mit dem Vorratstank (14) gekoppelt ist, eine Düse (320), die betriebsmäßig über die Pumpe (340) mit dem Vorratstank (14) gekoppelt ist, um ein Sprühmuster (430) zum Sprühen der wässrigen Lösung in Reaktion auf den Betrieb der Pumpe (340) zu erzeugen, wenn das Roboterfahrzeug (10) den Einsatzbereich (20) durchfährt und eine Steuereinheit (150), wobei die Steuereinheit (150) eine Verarbeitungsschaltung (110) enthält und ausgebildet ist, um die Eigenschaften der Pumpe (340) oder die Geschwindigkeit des Roboterfahrzeugs (10) anzupassen, um die Menge der wässrigen Lösung zu steuern, die auf den Einsatzbereich (20) aufgebracht wird; **dadurch gekennzeichnet, dass**
die Sprühanordnung (90) eine Düsenschnittstelle (330) umfasst, die ausgebildet ist, um einen Differenzdruck über eine Öffnung mit bekanntem Durchmesser der Düse (320) der Sprühanordnung (90) zu messen, um eine Durchflussrate der wässrigen Lösung zu bestimmen; und
die Düsenschnittstelle (330) einen Reed-Schalter oder Mikroschalter (334) umfasst, der funktionsfähig mit einer Komponente in einem Strömungsweg der aus der Düse (320) austretenden wässrigen Lösung gekoppelt ist, um den Fluss der wässrigen Lösung aus der Düse (320) über ein Rückkopplungssignal, das der Steuerschaltung (12) bereitgestellt wird, positiv zu bestätigen.

2. Roboterfahrzeug (10) nach Anspruch 1, wobei die Sprühanordnung (90) die Pumpe (340) umfasst, um Druck zum Sprühen der wässrigen Lösung bereitzustellen, und
wobei die Steuereinheit (12) ausgebildet ist, um einen konstanten Druck der Pumpe (340) aufrechtzuerhalten, während die Geschwindigkeit der Mobilitätsbaugruppe (410) angepasst wird, um die Menge an wässriger Lösung zu steuern, die auf einen gegebenen Teil des Einsatzbereichs (20) aufgebracht wird, oder
wobei die Steuereinheit (12) ausgebildet ist, um eine konstante Geschwindigkeit der Mobilitätsbaugruppe (410) beizubehalten, während sie den Druck der Pumpe (340) einstellt, um die Menge der wässrigen Lösung zu steuern, die auf einen gegebenen Teil des Bereichs (20) aufgebracht wird, oder
wobei die Steuereinheit (12) ausgebildet ist, um sowohl einen Druck der Pumpe (340) als auch die Geschwindigkeit der Mobilitätsbaugruppe (410) anzupassen, um die Menge an wässriger Lösung zu steuern, die auf einen gegebenen Teil des Einsatzbereichs (20) aufgebracht wird.

3. Roboterfahrzeug (10) nach Anspruch 1, wobei die Steuerschaltung (12) ein Kalibrierungsmodul (160) umfasst, wobei das Kalibrierungsmodul (160) den gemessenen Differenzdruck empfängt und aufzeichnet, um Änderungen der Durchflussrate der Düse (320) im Laufe der Zeit zu überwachen.

4. Roboterfahrzeug (1) nach Anspruch 3, wobei das Kalibrierungsmodul (160) ausgebildet ist, um eine gemessene Durchflussrate mit einer berechneten Durchflussrate zu vergleichen, um die Sprühanordnung (90) zu kalibrieren, wobei optional die berechnete Durchflussrate auf der Grundlage einer Zeit bestimmt wird, die benötigt wird, um den Vorratstank (14) von einem ersten Referenzfüllstand auf einen zweiten Referenzfüllstand zu entleeren.

5. Roboterfahrzeug (10) nach Anspruch 1, wobei die Steuerschaltung (12) ein Kalibrierungsmodul (160) umfasst, das ausgebildet ist, um eine gemessene Durchflussmenge eines Durchflussmessers mit einer berechneten Durchflussmenge zu vergleichen, um die Sprühanordnung (90) zu kalibrieren.

6. Roboterfahrzeug (10) nach Anspruch 1, wobei die Sprühanordnung (90) die Pumpe (340) umfasst, um Druck zum Versprühen der wässrigen Lösung bereitzustellen, und
wobei die Düsenschnittstelle (330) ausgebildet ist, um zu ermöglichen, dass die Düse (320) um eine Achse gedreht werden kann, die im Wesentlichen parallel zu einer Bodenoberfläche ist, um eine Richtung eines Sprühmusters (430) anzupassen, das von der Sprühanordnung (90) erzeugt wird, wobei sich optional ein Druck der Pumpe (340) ändert, wenn ein Betrag der Drehung der Düse (320) zunimmt.

7. Roboterfahrzeug (10) nach Anspruch 1, wobei die wässrige Lösung eine Enteisungslösung (724) ist.

8. Roboterfahrzeug (10) nach Anspruch 1, wobei ein Sprühmuster (430) der Sprühanordnung (90) einstellbar ist.

9. Roboterfahrzeug (10) nach Anspruch 8, wobei eine Form oder Breite (W) des Sprühmusters (90) durch Einstellen der Pumpengeschwindigkeit einstellbar ist.

10. Roboterfahrzeug (10) nach Anspruch 1, wobei die Steuereinheit (12) ausgebildet ist, um Informationen über die Wettervorhersage zu empfangen und Schätzungen für das Auftragen der Lösung, einschließlich der Startzeit und der Dichte des Auftragens der wässrigen Lösung auf den Bereich (20), auf der Grundlage der Informationen über die Wettervorhersage zu bestimmen.

11. Roboterfahrzeug (10) nach Anspruch 10, wobei die Steuereinheit (12) ferner ausgebildet ist, um lokale Wetterdaten von einem Sensornetzwerk (80) des Roboterfahrzeugs (10) während der Fahrt des Roboterfahrzeugs (10) über den Einsatzbereich (20) zu empfangen und eine Anpassung der Schätzungen für das Auftragen der Lösung auf der Grundlage der lokalen Wetterdaten zu bestimmen.

## Revendications

1. Un véhicule robotisé (10) configuré pour épandre une solution aqueuse telle qu'une solution de déglaçage (724), un engrais, un désherbant, un pré-émergent, un insecticide ou de l'eau sur une zone de service (20), le véhicule robotisé (10) comprenant:
un châssis (400) supportant un réservoir de stockage (14) dans lequel se trouve la solution aqueuse;
un ensemble de mobilité (410) couplé de manière opérationnelle au châssis (400) pour assurer la mobilité du véhicule robotisé (10) dans une zone de service (20);
un module de positionnement (60) configuré pour guider le véhicule robotisé (10) pendant le transit du véhicule robotisé (10) sur la zone de service (20);
un ensemble de pulvérisation (90) couplé de manière opérationnelle au réservoir de stockage (14) pour pulvériser la solution aqueuse pendant le déplacement du véhicule robotisé (10) sur l'aire de service (20); et
circuit de commande (12) couplé de manière opérationnelle à l'ensemble de pulvérisation (90) et au module de positionnement (60), le circuit de commande (12) étant configuré pour ajuster les caractéristiques de l'ensemble de pulvérisation (90) ou la vitesse de l'ensemble de mobilité (410) afin de contrôler une quantité de solution aqueuse appliquée à la zone de service (20),
l'ensemble de pulvérisation (90) comprend une pompe (340) couplée de manière opérationnelle au réservoir de stockage (14), une buse (320) couplée de manière opérationnelle au réservoir de stockage (14) via la pompe (340) pour générer un modèle de pulvérisation (430) pour pulvériser la solution aqueuse en réponse au fonctionnement de la pompe (340) lorsque le véhicule robotisé (10) traverse l'aire de service (20), et un contrôleur de débit (150), dans lequel le contrôleur de débit (150) comprend un circuit de traitement (110) et est configuré pour ajuster les caractéristiques de la pompe (340) ou la vitesse du véhicule robotisé (10) afin de contrôler la quantité de solution aqueuse appliquée à la zone de service (20);
**caractérisé par le fait que**
l'ensemble de pulvérisation (90) comprend une interface de buse (330) qui est configurée pour mesurer une pression différentielle à travers un orifice d'un diamètre connu de la buse (320) de l'ensemble de pulvérisation (90) afin de déterminer un débit de la solution aqueuse; et
l'interface de la buse (330) comprend un interrupteur à lames ou un micro-interrupteur (334) couplé de manière opérationnelle à un composant dans un chemin d'écoulement de la solution aqueuse sortant de la buse (320) pour confirmer positivement l'écoulement de la solution aqueuse de la buse (320) via un signal de retour fourni au circuit de commande (12).

2. Le véhicule robotisé (10) de la revendication 1, dans lequel l'ensemble de pulvérisation (90) comprend la pompe (340) pour fournir la pression nécessaire à la pulvérisation de la solution aqueuse, et
dans lequel le circuit de commande (12) est configuré pour maintenir une pression constante de la pompe (340) tout en ajustant la vitesse de l'ensemble de mobilité (410) pour contrôler la quantité de solution aqueuse appliquée à une partie donnée de la zone de service (20), ou
dans lequel le circuit de commande (12) est configuré pour maintenir une vitesse constante de l'ensemble de mobilité (410) tout en ajustant la pression de la pompe (340) pour contrôler la quantité de solution aqueuse appliquée à une partie donnée de la zone de service (20), ou
dans lequel le circuit de commande (12) est configuré pour ajuster à la fois la pression de la pompe (340) et la vitesse de l'ensemble de mobilité (410) afin de contrôler la quantité de solution aqueuse appliquée à une partie donnée de la zone de service (20).

3. Le véhicule robotisé (10) de la revendication 1, dans lequel le circuit de commande (12) comprend un module d'étalonnage (160), le module d'étalonnage (160) recevant et enregistrant la pression différentielle mesurée pour surveiller les changements de débit de la buse (320) dans le temps.

4. Le véhicule robotisé (1) de la revendication 3, dans lequel le module d'étalonnage (160) est configuré pour comparer un débit mesuré à un débit calculé afin d'étalonner l'ensemble de pulvérisation (90), le débit calculé étant éventuellement déterminé sur la base du temps nécessaire pour vider le réservoir de stockage (14) d'un premier niveau de remplissage de référence à un second niveau de remplissage de référence.

5. Le véhicule robotisé (10) de la revendication 1, dans lequel le circuit de commande (12) comprend un module d'étalonnage (160) configuré pour comparer un débit mesuré d'un débitmètre à un débit calculé afin d'étalonner l'ensemble de pulvérisation (90).

6. Le véhicule robotisé (10) de la revendication 1, dans lequel l'ensemble de pulvérisation (90) comprend la pompe (340) pour fournir la pression nécessaire à la pulvérisation de la solution aqueuse, et
dans lequel l'interface de buse (330) est configurée pour permettre à la buse (320) de tourner autour d'un axe sensiblement parallèle à la surface du sol afin d'ajuster la direction d'un modèle de pulvérisation (430) généré par l'ensemble de pulvérisation (90), dans lequel, en option, une pression de la pompe (340) change à mesure que le degré de rotation de la buse (320) augmente.

7. Le véhicule robotisé (10) de la revendication 1, dans lequel la solution aqueuse est une solution de dégivrage (724).

8. Le véhicule robotisé (10) de la revendication 1, dans lequel un modèle de pulvérisation (430) de l'ensemble de pulvérisation (90) est réglable.

9. Le véhicule robotisé (10) de la revendication 8, dans lequel la forme ou la largeur (W) du jet (90) est réglable en ajustant la vitesse de la pompe.

10. Le véhicule robotisé (10) de la revendication 1, dans lequel le circuit de commande (12) est configuré pour recevoir des informations sur les prévisions météorologiques et déterminer les estimations d'application de la solution, y compris l'heure de début et la densité d'application de la solution aqueuse sur la zone de service (20), sur la base des informations sur les prévisions météorologiques.

11. Le véhicule robotisé (10) de la revendication 10, dans lequel le circuit de commande (12) est en outre configuré pour recevoir des données météorologiques locales d'un réseau de capteurs (80) du véhicule robotisé (10) pendant le transit du véhicule robotisé (10) sur la zone de service (20), et déterminer un ajustement des estimations de l'application de la solution sur la base des données météorologiques locales.
